# EUROPEAN PATENT APPLICATION

(11) **EP 4 679 314 A1**
(43) Date of publication of application: **14.01.2026**
(21) Application number: 25188069.6
(22) Date of filing: 08.07.2025
(51) Int. Cl.: G06F 40/216, G06F 40/30, G06F 40/35, G06F 40/44, G06F 40/56

(54) **TEXT GENERATION PROGRAM, TEXT GENERATION METHOD, AND TEXT GENERATION DEVICE**

(30) Priority: 11.07.2024 JP 2024112030
(71) Applicant: FUJITSU LIMITED, Kawasaki-shi, Kanagawa 211-8588 (JP)
(72) Inventor: Yoshii, Akihito, Kawasaki-shi, Kanagawa, 211-8588 (JP)
(74) Representative: Hoffmann Eitle

(57) **Abstract**

A computer is caused to execute processing of acquiring a template text serving as a norm and a reference text, generating graph data including noun phrases included in the reference text and information about a relation between the noun phrases in the reference text, on the basis of the reference text, and inputting a prompt including the generated graph data and the template text to an LLM to generate a rewritten text satisfying a requirement defined in the template text.

## Description

### FIELD

The embodiments discussed herein are related to a text generation program, a text generation method, and a text generation device.

### BACKGROUND

Various technologies have been proposed for text generation. For example, a technology of creating and replacing a comparison table of keywords, a technology of converting a graph or the like into data expression to generate a text, a technology of summarizing a plurality of texts to generate one summary sentence, a technology of inputting a prompt to a large-scale language generation model to generate a text, and the like are known.
Non Patent Literature 1: Yupian Lin, Tong Ruan, Jingping Liu, and Haofen Wang, "A Survey on Neural Data-to-Text Generation", IEEE Transactions on Knowledge and Data Engineering, Volume 36, Issue 4, April 2024
Non Patent Literature 2: Claire Gardent, Anastasia Shimorina, Shashi Narayan, "Creating Training Corpora for NLG Micro-Planning", Association for Computational Linguistics, August 2017
Non Patent Literature 3: Mir Tafseer Nayeem, Tanvir Ahmed Fuad, Yllias Chali, "Abstractive Unsupervised Multi-Document Summarization using Paraphrastic Sentence Fusion", International Conference on Computational Linguistics, August 2018
Non Patent Literature 4: Danqing Wang, Pengfei Liu, Yining Zheng, Xipeng Qiu, Xuanjing Huang, "Heterogeneous Graph Neural Networks for Extractive Document Summarization", Association for Computational Linguistics, July 2020

However, with the above technology or a simple combination thereof, it is difficult to generate a sentence incorporating the meaning and structure of another independent text while maintaining the meaning and structure of the original text.

Accordingly, it is an object in one aspect of an embodiment of the present invention to provide a text generation program, a text generation method, and a text generation device that facilitates generation of a text appropriately incorporating meanings of a plurality of texts.

### SUMMARY

According to an aspect of an embodiment, a text generation program causes a computer (1) to execute a process including acquiring (S111) a first text serving as a norm and a second text related to a case example, first generating (S112) graph data of the second text including noun phrases included in the second text and information about a relation between the noun phrases in the second text, based on the second text, and first inputting (S113-S118) a prompt including the graph data of the second text generated, and the first text, to a large-scale language model to generate a third text satisfying a requirement defined in the first text.

### BRIEF DESCRIPTION OF DRAWINGS

FIG. 1 is a diagram illustrating an example of a situation in which text generation according to an embodiment is useful;
FIG. 2 is a diagram illustrating an example of text generation using data to text generation (D2T);
FIG. 3 is a diagram illustrating an example of generation of a summary sentence by using multi-document summarization (MDS);
FIG. 4 is a diagram illustrating an example of a simple combination of D2T and MDS;
FIG. 5 is a diagram illustrating an example of rewriting a text by using LLM enabling performance of an NLP task by using a prompt;
FIG. 6 is a block diagram of a text generation device;
FIG. 7 is a diagram for illustrating training for prediction of a rewritten text;
FIG. 8 is a diagram illustrating an example of a triplet generation process;
FIG. 9 is a diagram illustrating an example of a triplet;
FIG. 10 is a diagram illustrating an example of a prompt for generation of a similar pair;
FIG. 11 is a diagram illustrating an example of a similar pair generation process;
FIG. 12 is a diagram illustrating an example of a prompt for text rewriting by using a hint sentence;
FIG. 13 is a diagram illustrating an example of text rewriting using the hint sentence;
FIG. 14 is a flowchart of a triplet extraction process using LLM;
FIG. 15 is a flowchart of a similar pair generation process using LLM;
FIG. 16 is a flowchart of a process for hint sentence generation and text rewriting with use of LLM;
FIG. 17 is a diagram illustrating an example of a hint sentence generation process according to a second example;
FIG. 18 is a flowchart of a process for hint sentence generation and text rewriting according to a third example;
FIG. 19 is a flowchart of a triplet extraction process using morphological analysis according to a fourth example;
FIG. 20 is a flowchart of a similar pair generation process using a comparison function for a character string according to the fourth example;
FIG. 21 is a flowchart a process for hint sentence generation and text rewriting without use of LLM; and
FIG. 22 is a hardware configuration diagram of a text generation device.

### DESCRIPTION OF EMBODIMENTS

Preferred embodiments will be explained with reference to accompanying drawings. Note that the text generation program, the text generation method, and the text generation device disclosed in the present application are not limited to the following examples.

### First example

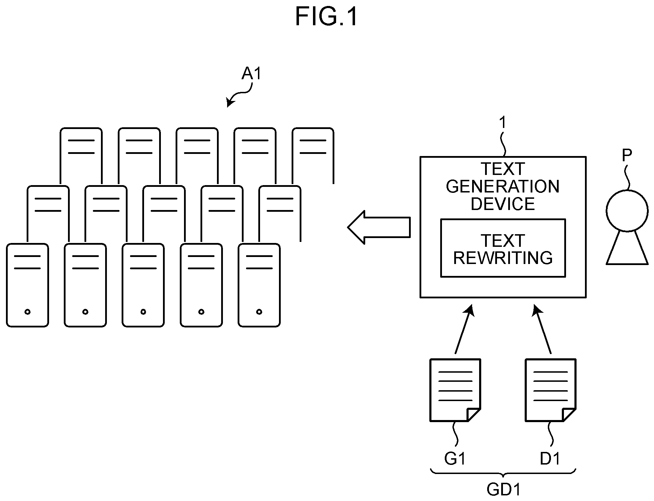

FIG. 1 is a diagram illustrating an example of a situation in which text generation according to an embodiment is useful. For example, there is an AI system A1 under development. In this situation, extraction of a potential risk of the AI system A1 may be demanded from an operator P of the AI system A1 such as a developer or an administrator, in some cases. In such a case, for example, the operator P obtains a guideline G1 having summarized confirmation viewpoints to assess the AI system A1 according to the guideline G1.

However, the text of check items described in the guideline G1 has versatile contents and is written in a general expression. Therefore, the operator P acquires a document D1 related to the specifications of the AI system A1. Then, the operator P complements each of the check items described in the guideline G1 with contents described in the document D1, creates check items according to the AI system Al, and assesses the AI system A1.

However, when the operator P compares the guideline G1 and the document D1 to create the check items suitable for the AI system A1, the processing is complicated, and there may be also a possibility of occurrence of human error. In this case, with a rewritten document GD1 in which the guideline G1 is rewritten according to the context of the document D1, the operator P is allowed to simply assess the AI system A1 according to the rewritten document GD1, making it possible to simplify labor and suppress occurrence of human error.

In such a situation, automatic generation of a rewritten text obtained by rewriting a template text according to the context of a reference text is demanded, with the contents of the guideline G1 as the template text and the contents of the document D1 as the reference text. Here, the following technologies are provided as technologies for text generation.

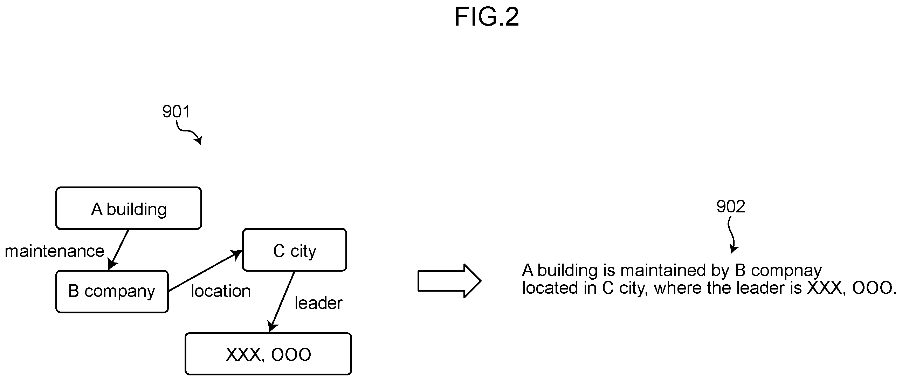

FIG. 2 is a diagram illustrating an example of text generation using data to text generation (D2T). D2T is a technology to generate accurate and natural text expression from data expressed in non-natural language such as graph data or a table.

For example, generation of a text for a graph data 901 which is a knowledge graph by using the D2T will be described. In the graph data 901, "A building" and "B company" are linked with a relation "maintenance". In addition, "B company" and "C city" are linked with a relation "location". Furthermore, "C city" and "XXX. OOO" are linked with a relation "leader". Then, the D2T is used for the graph data 901 to estimate a sentence structure from noun phrases and their relation, and a text 902 is generated.

However, the D2T is a technology that assumes that a text is expressed on the basis of one piece of data. Therefore, it is difficult to rewrite a text by using two texts of the template text and the reference text as described above.

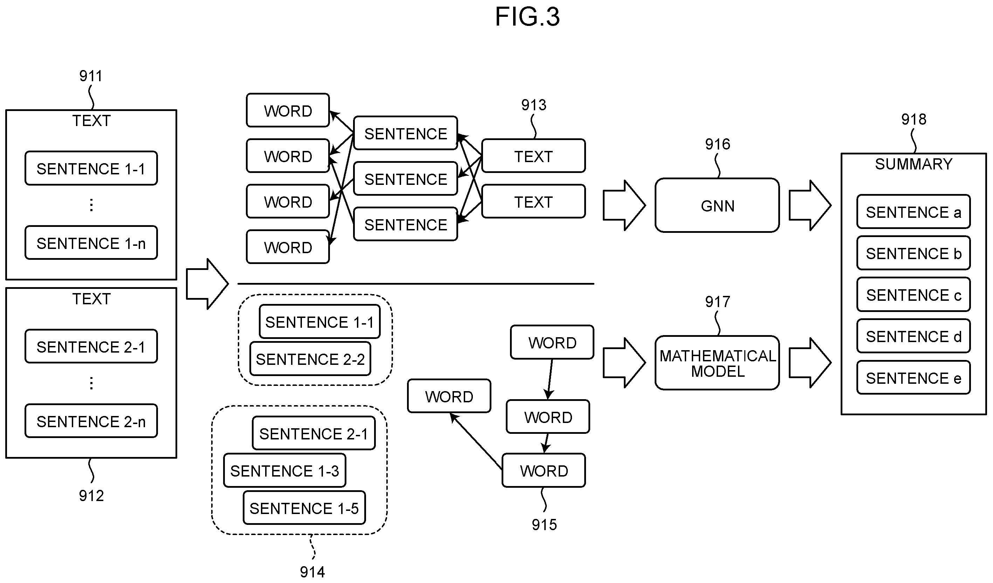

FIG. 3 is a diagram illustrating an example of generation of a summary sentence by using multi-document summarization (MDS). The MDS is a technology for generating a summary sentence in which a plurality of documents related to a specific topic is summarized. D2T is a technology that assumes that a text is expressed on the basis of one piece of data.

Here, a description will be made of texts 911 and 912. The text is, for example, a collection of a plurality of sentences divided by a period. Furthermore, a sentence is composed of a combination of a plurality of words.

For example, the following method is provided as a method of MDS. A hierarchical graph 913 is created from the texts 911 and 912. In addition, a graph neural network (GNN) 916 is trained to select sentences used for a summary and create a summary sentence with training data including a graph of a plurality of sentences and a summary created from these sentences. Then, the graph 913 is input to the trained GNN 916, and a summary 918 output from the GNN 916 is obtained.

In addition, the following method is provided as another method of the MDS. Sentences, among the sentences included in the texts 911 and 912, that have similar meanings are clustered to generate a plurality of clusters 914. Furthermore, a word graph 915 is created for each of the sentences. In addition, a mathematical model 917 is prepared that selects sentences to be used and creates a summary sentence. Then, the mathematical model 917 is used for the cluster 914 and the word graph 915 to obtain the summary 918.

However, when the template text is rewritten according to the context of the reference text, emphasis is preferably put on the structure of the template text. In contrast, when MDS is used, a summary in which a plurality of sources is all considered is generated, and it is difficult to perform appropriate rewriting according to a purpose. In addition, under a condition that the template text is shorter than the reference text and has a content different from that of the reference text, when the MDS is used, there is a possibility that the words or structure of the template text is not fully reflected in the rewritten text.

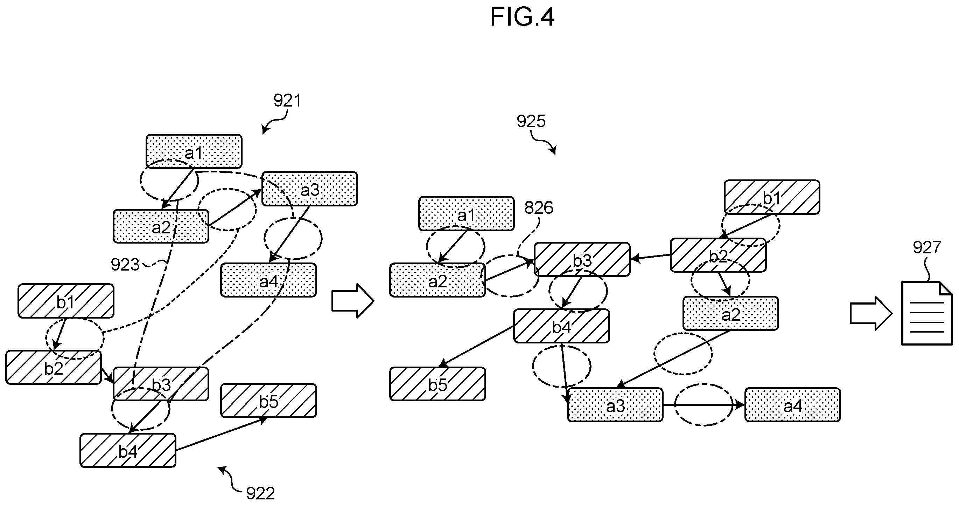

FIG. 4 is a diagram illustrating an example of a simple combination of D2T and MDS. Here, an example of creation of one sentence by combining a text 921 and a text 922 will be described. For example, a method is considered to combine relations similar to each other in series by using MDS, on the basis of similarity between a relation that connects noun phrases a1 to a4 of the text 921 and a relation that connects noun phrases b1 to b4 of the text 922. In the text 921 and the text 922, relations connected by an edge such as an edge 923 indicate mutual similarity. Therefore, a graph 925 in which the text 921 and the text 922 are summarized is created. Then, for the created graph 925, a synthesis text 927 is created using D2T.

However, in such a method, there is a possibility that the graph may become complicated due to an increase in branching of the graph, occurrence of a loop, or the like. When a complicated graph is used, there is a possibility that the text becomes complicated and an appropriate text is not generated. Furthermore, in order to prevent the complicated text, it is conceivable to remove relations not so relevant to each other between the texts in the graph, but there is a possibility that an unnatural text or a text whose meaning is separated from that of the original sentence may be created.

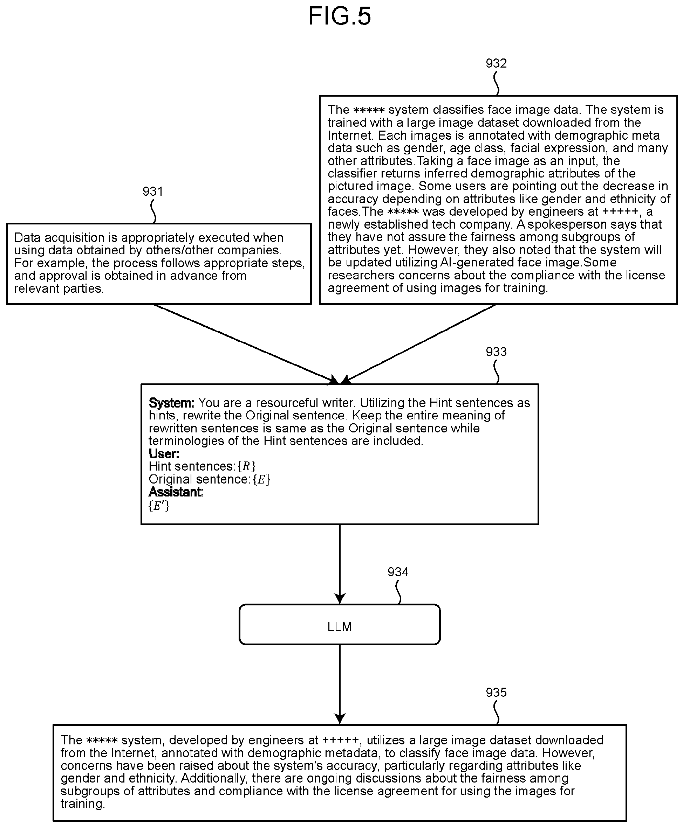

FIG. 5 is a diagram illustrating an example of rewriting a text by using a large language model (LLM) enabling performance of a natural language processing (NLP) task by using a prompt. For example, giving an instruction to an LLM 934 by using a prompt 933 that instructs generation of a text rewritten from a template text 931 and a reference text 932 provides a rewritten text 935 generated by the LLM 934.

However, in some case, a redundant sentence may be included in the text, and thus, there is also a possibility that the LLM 934 that considers all input sentences of the text does not appropriately perform rewriting.

In summary, with the above-described technologies and simple combinations thereof, it is difficult to generate the rewritten text incorporating the meaning of an independent reference text as well while maintaining the meaning and structure of the template text. For example, when the template text and the reference text are independent from each other and completely unrelated to each other, use of the method of considering the similarity between the texts or the method uniformly incorporating all sentences as a source such as summary may generate an insufficient text. In addition, when a redundant content unrelated to an original text is included, there is a possibility that a text as a result of the output may become unnatural. Furthermore, when simple application of LLM, it is considered that, for appropriate text generation, trial and error in prompt engineering, a fine tuning, and the like need time, cost, and labor, and achievement of appropriate text generation is made difficult. Furthermore, even when a detailed prompt is created with time, cost, and labor, the prompt does not always have a better result.

Therefore, as illustrated in FIG. 1, the operator P uses a text generation device 1 according to the present example to generate the rewritten document GD1 having the rewritten text incorporating the meaning of the document D1 while maintaining the meaning and structure of the guideline G1. The text generation device 1 is used for computer improvement for a computer that generates a conventional text. In addition, the operator P is allowed to assess the AI system A1 according to the rewritten document GD1 in which the check items matching the AI system A1 are described. Hereinafter, details of the text generation device 1 according to the present example will be described.

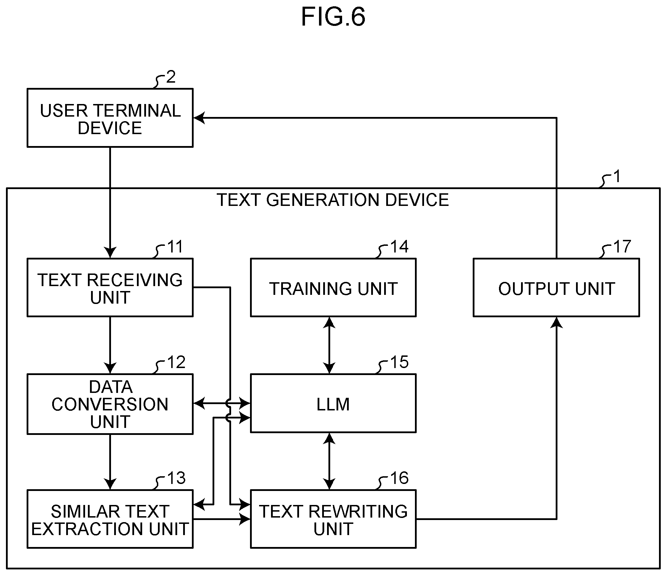

FIG. 6 is a block diagram of the text generation device. The text generation device 1 includes a text receiving unit 11, a data conversion unit 12, a similar text extraction unit 13, a training unit 14, an LLM 15, a text rewriting unit 16, and an output unit 17.

The LLM 15 is a language model that is trained using a large amount of calculation, a large amount of data, and a large amount of parameters, performs processing trained with a natural language as an input, and returns a response. In the present example, the configuration in which the text generation device 1 includes the LLM 15 has been described, but the LLM 15 may be arranged outside the text generation device 1, for example, may be arranged in cloud.

The training unit 14 trains the LLM 15. For example, the training unit 14 uses training data having combinations of texts and the graph data obtained from the respective sentences included in the texts to train the LLM 15 with a large number of pieces of the training data. Therefore, when a specific text is input, the LLM 15 is allowed to output a triplet obtained from each of sentences included in the specific text.

Furthermore, for example, the training unit 14 uses, as the training data, a set of the graph data of the template text and the graph data of the reference text, and information indicating whether the graph data of reference text is similar to the graph data of the template text, as the training data. Then, the training unit 14 trains the LLM 15 by using the large number of pieces of training data. This configuration enables the LLM 15 to determine whether the graph data of the reference text is similar to the graph data of the template text, when the graph data of the template text and the graph data of the reference text are input.

In addition, the training unit 14 uses training data that has the template text and a similar pair of the graph data of the template text and the graph data of the reference text, as well as the rewritten text obtained by rewriting the template text on the basis of the reference text to train the LLM 15 by a large number of pieces of the training data. This configuration enables the LLM 15 to output the rewritten text obtained by rewriting the template text on the basis of the reference text, when the template text and the similar pair of the graph data of the template text and the graph data of the reference text are input.

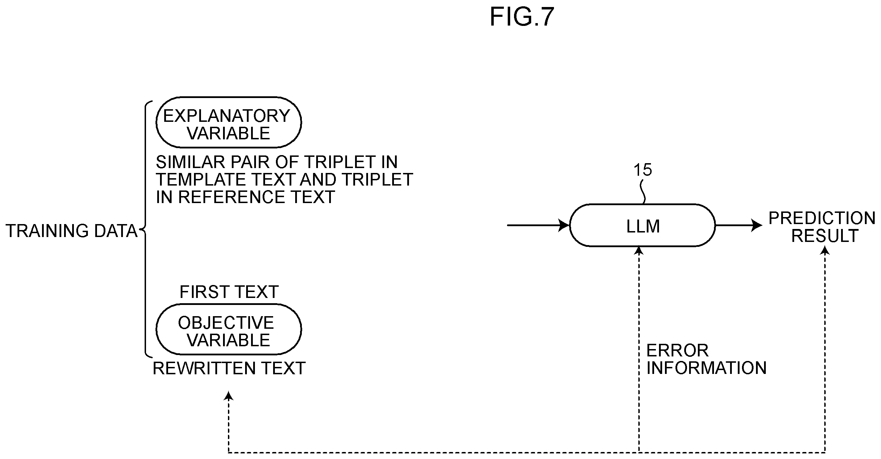

FIG. 7 is a diagram for illustrating training for prediction of the rewritten text. In the present example, the triplet is used as the graph data. The template text and a similar pair of a triplet in the template text and a triplet in the reference text serve as explanatory variables. In addition, the rewritten text obtained by rewriting the template text according to the meaning of the reference text serves as an objective variable. Then, the training unit 14 adjusts parameters of the LLM 15 on the basis of error information between a prediction result and the objective variable when the explanatory variables are input to the LLM 15 to train the LLM 15.

More specifically, the training of the prediction of the rewritten text may be performed according to the following steps. For example, the training unit 14 gives a function for obtaining a hint sentence from the similar pair of the triplet in the template text and the triplet in the reference text to the LLM 15. Then, the training unit 14 uses the function, for the similar pair of the triplet in the template text and the triplet in the reference text to cause the LLM 15 to generate the hint sentence. Then, the training unit 14 causes the LLM 15 to perform prediction with the hint sentence and the template text as inputs, and perform parameter adjustment for the LLM 15 by using the error information between the prediction and the rewritten text obtained by rewriting the template text according to the meaning of the reference text.

Referring back to FIG. 1, the description will be continued. The text receiving unit 11 receives the template text and the reference text input from the operator P, from a user terminal device 2. Then, the text receiving unit 11 outputs the template text and the reference text to the data conversion unit 12. Furthermore, the text receiving unit 11 outputs the template text to the text rewriting unit 16.

The template text is, for example, a text described in a document related to assessment that satisfies conditions to be satisfied, such as a law or a check list. Furthermore, the reference text is, for example, a text described in a document in which an outline related to a main subject such as a specification or a note related to the AI system A1 is described. This template text corresponds to an example of a "first text", and the reference text corresponds to an example of a "second text". In other words, the text receiving unit 11 acquires each of the first text serving as a norm, i.e., a principle and the second text related to a case example. Processing of the acquisition includes acquiring the text related to the assessment that satisfies requirements to be satisfied, as the first text, and acquiring the text in which the outline related to the main subject is described, as the second text.

The data conversion unit 12 receives inputs of the template text and the reference text from the text receiving unit 11. Then, the data conversion unit 12 converts the template text into the graph data. In the present example, the data conversion unit 12 inputs the template text to the LLM 15 having been trained and acquires a triplet set output from the LLM 15. The triplet includes three pieces of information, that is, two noun phrases included in a sentence and a relation connecting these two noun phrases. In other words, the triplet can be said to include a set of three words/phrases of a subject, an object, and the relation.

Similarly, the data conversion unit 12 converts the reference text into a triplet set. Thereafter, the data conversion unit 12 outputs the triplet set of the template text and the triplet set of the reference text to the similar text extraction unit 13.

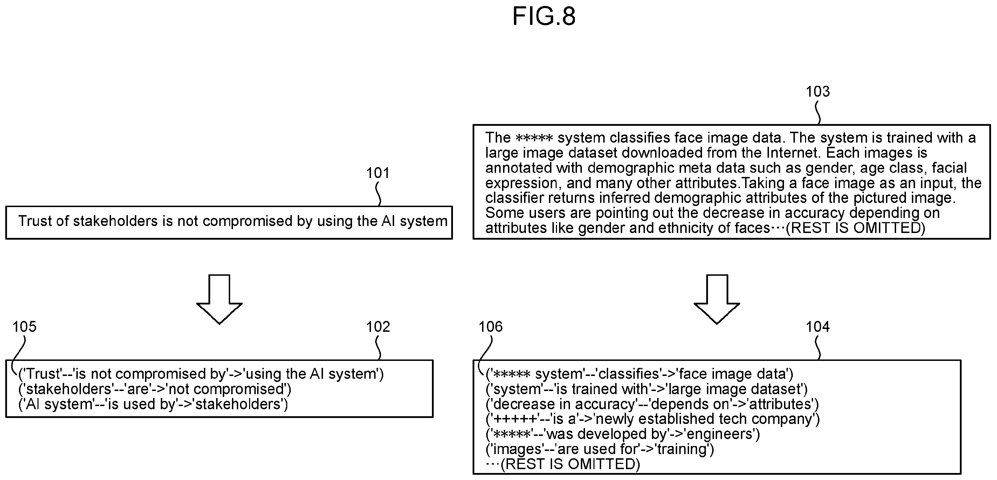

FIG. 8 is a diagram illustrating an example of a triplet generation process. For example, the data conversion unit 12 receives an input of a template text 101 and a reference text 103. Then, the data conversion unit 12 inputs the template text 101 to the LLM 15 having been trained and acquires a triplet set 102 output from the LLM 15. For example, the triplet set 102 includes three triplets. Furthermore, the data conversion unit 12 inputs the reference text 103 to the LLM 15 having been trained and acquires a triplet set 104 output from the LLM 15.

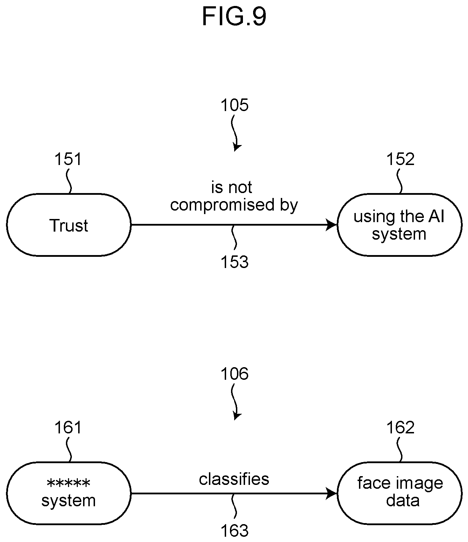

FIG. 9 is a diagram illustrating an example of a triplet. For example, one triplet 105 included in the triplet set 102 in FIG. 8 includes a subject 151 of "Trust" and an object 152 of "using the AI system", as illustrated in FIG. 9. Furthermore, the triplet 105 includes a relation 153 of "is not compromised by" as a word/phrase linking the subject 151 and the object 152.

As illustrated in FIG. 9, one triplet 106 included in the triplet set 104 in FIG. 8 includes a subject 161 "***** system" and an object 162 "face image data". Furthermore, the triplet 106 includes a relation 153 of "classifies" as a word/phrase linking the subject 161 and the object 162.

Here, the triplet of a template sentence corresponds to an example of "graph data of the first text". Furthermore, the triplet of a reference sentence corresponds to an example of "graph data of the second text". In other words, the data conversion unit 12 generates the graph data of the second text including the noun phrases included in the second text and information about the relation between the noun phrases in the second text, on the basis of the second text that is the reference text. Furthermore, the data conversion unit 12 generates the graph data of the first text including the noun phrases included in the first text and information about the relation between the noun phrases in the first text, on the basis of the first text that is the template text. In addition, the processing of generating the graph data of the second text includes generating, as the graph data, the triplet including the subject and the object that are noun phrases and the relation indicating association between the subject and the object.

Referring back to FIG. 6, the description will be continued. The similar text extraction unit 13 receives inputs of the triplet set of the template text and the triplet set of the reference text, from the data conversion unit 12. The similar text extraction unit 13 extracts a triplet in the reference text similar to each of the triplets included in the triplet set of the template text. The similar text extraction unit 13 sets the triplet in the template text and the triplet in the reference text that are similar to each other, as the similar pair, and acquires a similar pair set including a plurality of the similar pairs.

In the present example, the similar text extraction unit 13 inputs the triplet set of the template text and the triplet set of the reference text, and a prompt that instructs extraction of the similar pair from the triplet sets, to the LLM 15 having been trained, and acquires the similar pair set output from the LLM 15. Thereafter, the similar text extraction unit 13 outputs the acquired similar pair set to the text rewriting unit 16.

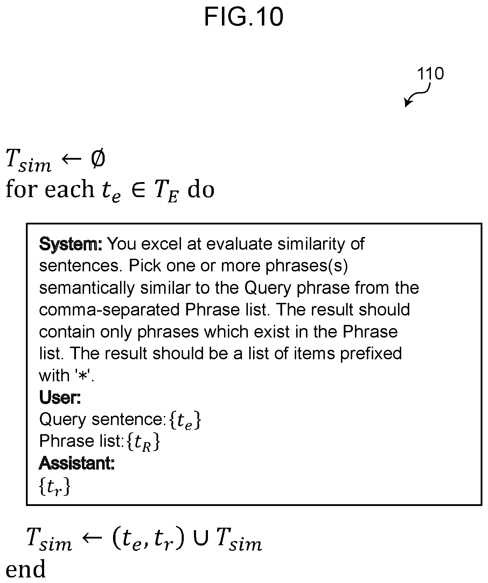

FIG. 10 is a diagram illustrating an example of a prompt for generation of a similar pair. Here, T_{E} represents a triplet set of the template text, and Tᵣ represents a triplet set of the reference text. Furthermore, tₑ represents each triplet included in T_{E}. Furthermore, Tₛᵢₘ is a similar pair set.

The similar text extraction unit 13 is configured to hold a format of a similar pair generation prompt 110 in advance, and complete the similar pair generation prompt 110 by, for example, complementing the format according to the acquired triplet set of the template text and triplet set of the reference text. In addition, the similar text extraction unit 13 may acquire the similar pair generation prompt 110 generated by the operator P.

The similar pair generation prompt 110 causes the LLM 15 to perform processing of extracting a similar triplet, from among triplets included in Tᵣ that is the reference sentence, for each of triplets included in T_{E} that is the template sentence, as a similar pair. The similar pair generation prompt 110 also permits extraction of a plurality of triplets included in Tᵣ for one triplet included in T_{E}, for generation of a plurality of similar pairs. The similar pair generation prompt 110 causes the LLM 15 to generate the similar pairs for all of the triplets included in the T_{E}.

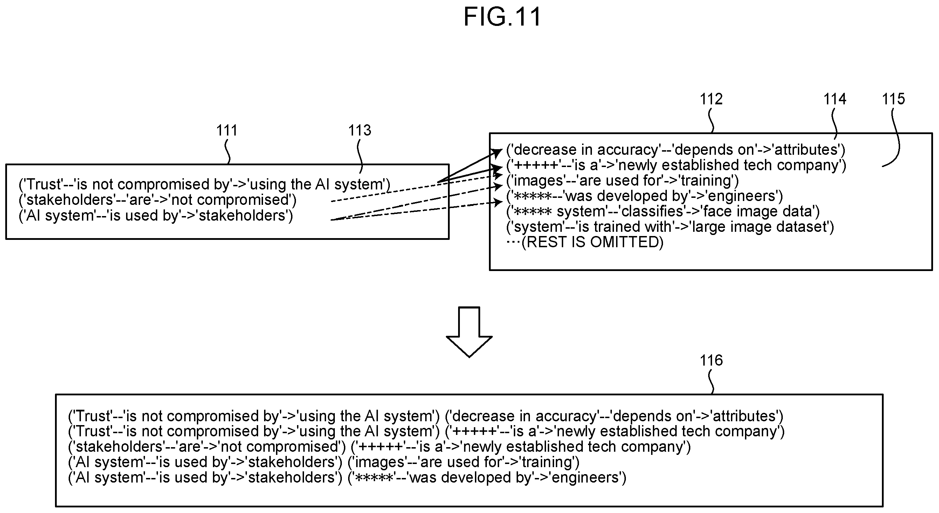

FIG. 11 is a diagram illustrating an example of a similar pair generation process. For example, the similar text extraction unit 13 inputs a triplet set 111 of the template text, a triplet set 112 of a reference text, and the similar pair generation prompt 110 to the LLM 15. In this configuration, for each of the triplets included in the triplet set 111, a similar triplet is extracted by the LLM 15 from the triplet set 112. In FIG. 11, a triplet of the triplet set 112 connected by an arrow extending from each triplet of the triplet set 111 is a similar triplet. For example, the triplet 113 is similar to the triplets 114 and 115. In this case, two similar pairs of a similar pair of the triplet 113 and the triplet 114 and a similar pair of the triplet 113 and the triplet 115 are generated.
Then, the similar text extraction unit 13 acquires a similar pair set 116 output from the LLM 15.

Furthermore, here, the similar text extraction unit 13 has caused the LLM 15 to collectively perform determination of similarity and the generation of the similar pair set, but the present invention is not limited thereto. For example, the similar text extraction unit 13 may cause the LLM 15 to determine whether the triplet of the template sentence and the triplet of the reference sentence are similar to each other, before collecting the triplet pairs determined to be similar to each other based on a result of the determination, for generation of the similar pair set.

In this manner, the similar text extraction unit 13 identifies the graph data of the second text similar to the graph data of the first text.

Referring back to FIG. 6, the description will be continued. The text rewriting unit 16 receives an input of the similar pair set from the similar text extraction unit 13. Furthermore, the text rewriting unit 16 receives an input of the template text from the text receiving unit 11.

The text rewriting unit 16 acquires the triplets in the reference text included in the similar pair set. Next, the text rewriting unit 16 generates a hint text serving as a hint for rewriting of the template text, from the acquired triplets in the reference text. Next, the text rewriting unit 16 uses the generated hint text to rewrite the template text for generation of the rewritten text. Thereafter, the text rewriting unit 16 outputs the generated rewritten text to the output unit 17.

In the present example, the text rewriting unit 16 inputs the similar pair set and the template text, to the LLM 15 having been trained. As a result, the text rewriting unit 16 causes the LLM 15 to generate the hint sentence based on each similar pair included in the similar pair set, sequentially rewrite the template text on the basis of each of the generated hint sentences, and generate the rewritten text. For example, the hint sentence may be a sentence in which words/phrases included in the triplet in the reference text are arranged in the order of the subject, the relation, and the object. The text rewriting unit 16 outputs the generated rewritten text to the output unit 17.

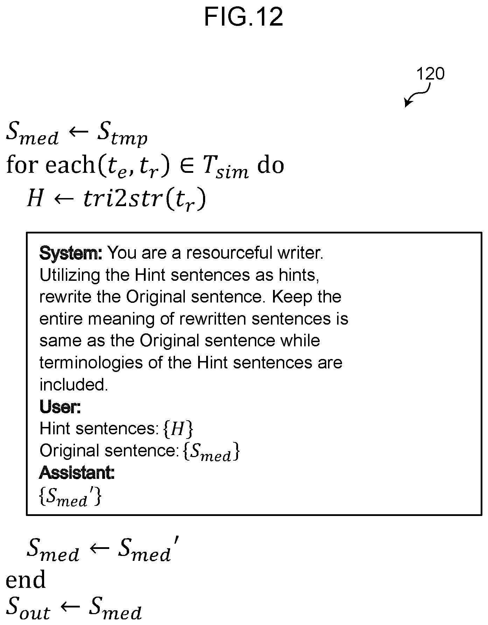

FIG. 12 is a diagram illustrating an example of a prompt for text rewriting by using the hint sentence. Here, S_{med} is an intermediate text in the middle of rewriting the template text. Furthermore, Sₜₘₚ is a template text. In addition, Tₛᵢₘ represents a similar pair set, and (tₑ, tᵣ) represents a similar pair of a triplet tₑ of a template sentence and a triplet tᵣ of a reference sentence. Furthermore, H is a hint sentence. Furthermore, "tri2str" is a function that generates a hint sentence from a triplet, and is, for example, a function that generates a sentence in which words/phrases included in a triplet in the reference text are arranged in the order of the subject, the relation, and the object. Furthermore, Sₒᵤₜ is a rewritten text in which rewriting of the template text with the reference text is completed.

The text rewriting unit 16 is configured to hold a format of a text rewrite prompt 120 in advance, and complete the text rewrite prompt 120 by, for example, complementing the format according to the acquired template text and the similar pair set. In addition, the text rewriting unit 16 may acquire the text rewrite prompt 120 generated by the operator P.

The text rewrite prompt 120 causes the LLM 15 to set an initial state of S_{med} to Sₜₘₚ that is the template text. Then, the text rewrite prompt 120 causes the LLM 15 to generate the hint sentence H by using the function tri2str, for each of the similar pairs included in Tₛᵢₘ. Then, the text rewrite prompt 120 uses the generated hint sentence H to rewrite the intermediate text S_{med}, causes the LLM 15 to generate S_{med}', and sets S_{med} as the generated S_{med}'. The text rewrite prompt 120 causes the LLM 15 to repeat the the above-described processing, for each of the similar pairs, and sequentially rewrite S_{med} with the hint sentences created from the respective similar pairs. When the rewriting using all the similar pairs is finished, the text rewrite prompt 120 causes the LLM 15 to set the intermediate text S_{med} at that time, as the final rewritten text Sₒᵤₜ.

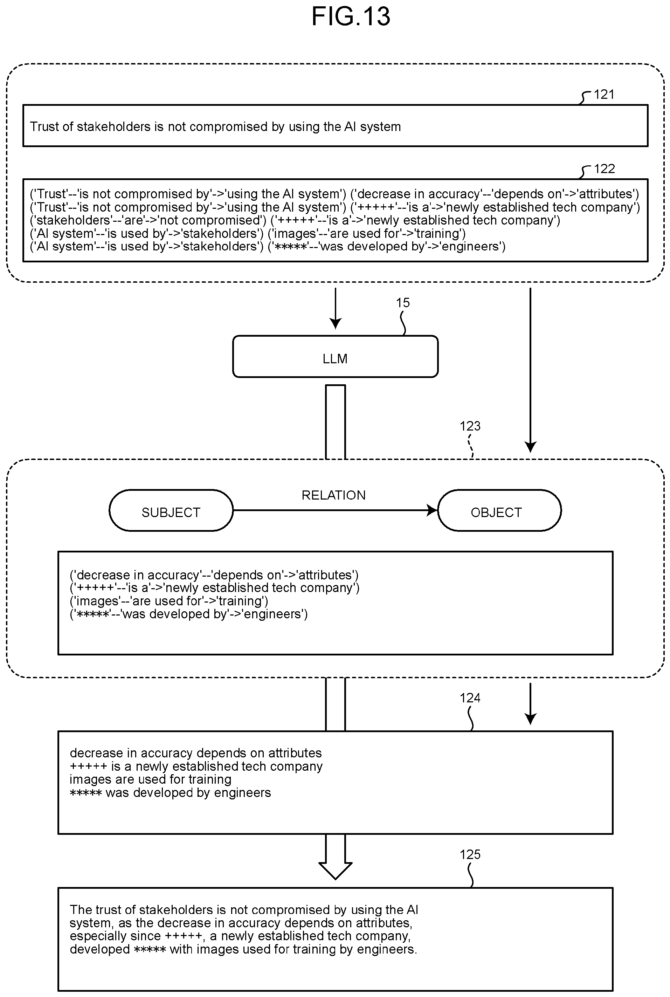

FIG. 13 is a diagram illustrating an example of text rewriting using the hint sentence. For example, the text rewriting unit 16 receives inputs of a template text 121 and a similar pair set 122. Then, the text rewriting unit 16 inputs the template text 121 and the similar pair set 122 to the LLM 15. In this configuration, a triplet group 123 of the reference text included in the similar pair set 122 is extracted by the LLM 15. As schematically illustrated in the triplet group 123, each triplet includes a set of three words/phrases of the subject, the relation, and the object.

Then, from the triplet group 123, for example, a hint sentence group 124 including hint sentences corresponding to the triplets in the reference text is generated by the LLM 15. Then, the template text 121 is sequentially rewritten on the basis of the hint sentences included in the hint sentence group 124 by the LLM 15, and a rewritten text 125 is completed. The text rewriting unit 16 acquires the rewritten text 125 output from the LLM 15.

Here, the rewritten text corresponds to an example of a "third text". In this way, the text rewriting unit 16 inputs the prompt including the graph data of the second text that is the graph data of the reference text and the first text that is the template text, to the large-scale language model, on the basis of the second text that is the reference text. Therefore, the text rewriting unit 16 generates the third text satisfying the requirements defined in the first text. Furthermore, the hint sentence corresponds to an example of a "referenced sentence". Processing of generating the third text includes generating the referenced sentence corresponding to each piece of graph data of the first text, on the basis of the specified graph data of the second text. Furthermore, the processing of generating the third text includes inputting the first text and the generated referenced sentence, and a prompt that instructs rewriting of the first text based on the referenced sentence, to the large-scale language model, and generating the third document in which the first text is rewritten based on the second text and the requirements defined in the first text are reflected. In addition, the processing of generating the third text includes repeatedly generating the intermediate text based on the referenced sentence, the first text, and the prompt, for each of the referenced sentences generated, for rewriting of the intermediate text.

Referring back to FIG. 6, the description will be continued. The output unit 17 receives an input of the rewritten text from the text rewriting unit 16. Then, the output unit 17 transmits the rewritten text to the user terminal device 2. This configuration enables the operator P to acquire the rewritten document GD1 in which the rewritten text is described, as illustrated in FIG. 1. Using this document, the operator P is allowed to assess the AI system A1 on the basis of the rewritten text incorporating the meaning of the reference text into the template text.

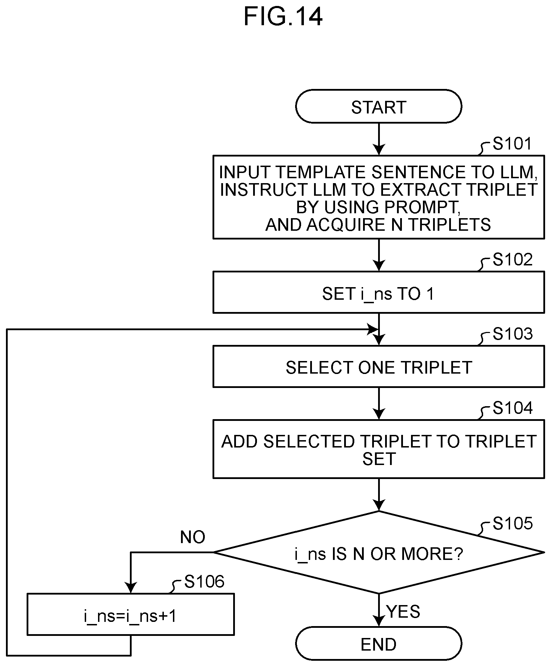

FIG. 14 is a flowchart of a triplet extraction process using the LLM. Next, a procedure of the triplet extraction process using the LLM 15 will be described with reference to FIG. 14. Here, an example of triplet extraction from the template text will be described, but the same applies to the reference text.

The data conversion unit 12 inputs the template sentence to the LLM 15, instructs the LLM 15 to extract the triplet by using a prompt, and acquires N triplets (Step S101).

Next, the data conversion unit 12 sets a value of i_ns to 1 (Step S102).

Next, the data conversion unit 12 selects one triplet from the extracted triplets (Step S103).

Next, the data conversion unit 12 adds the selected triplet to the triplet set (Step S104).

Next, the data conversion unit 12 determines whether the value of i_ns is N or more (Step S105). When the value of i_ns is smaller than N (Step S105: No), the data conversion unit 12 increments the value of i_ns by one (Step S106). Thereafter, the data conversion unit 12 returns to Step S103.

In contrast, when the value of i_ns is N or more (Step S105: Yes), the data conversion unit 12 finishes the triplet extraction process.

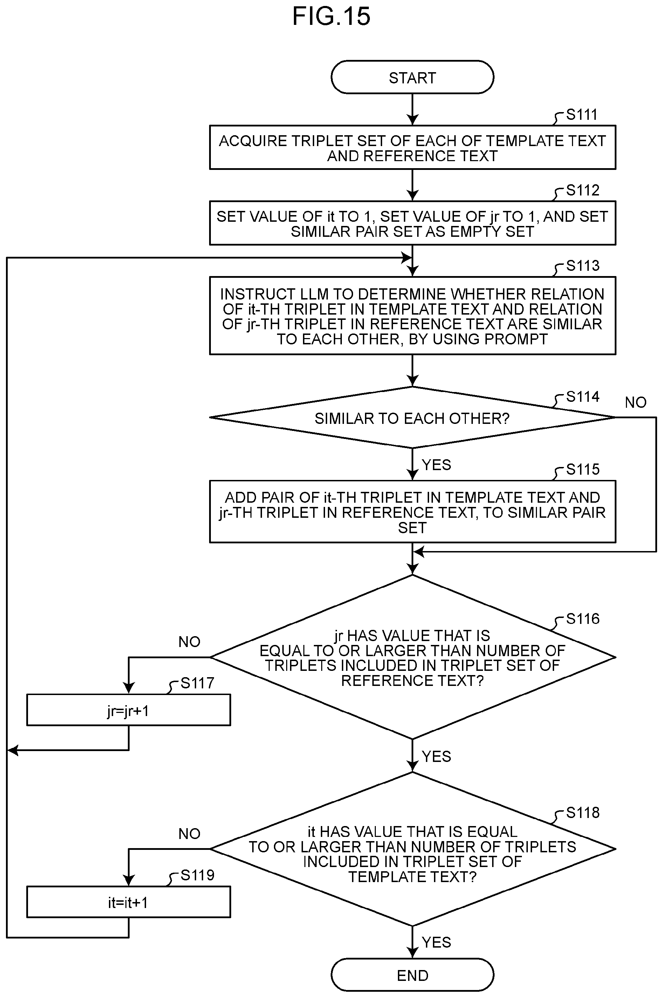

FIG. 15 is a flowchart of a similar pair generation process using the LLM. Next, a procedure of the similar pair generation process using the LLM 15 will be described with reference to FIG. 15.

The similar text extraction unit 13 acquires a triplet set of each of the template text and the reference text (Step S111). Here, the similar text extraction unit 13 sequentially assigns numbers from 1 to the respective triplets included in the triplet set of the template text. Similarly, the similar text extraction unit 13 sequentially assigns numbers from 1 to the respective triplets included in the triplet set of the reference text. Hereinafter, each of the triplets included in the triplet set to which a predetermined number is assigned is referred to as a triplet at a predetermined numbered place in a sequence.

Next, the similar text extraction unit 13 sets a value of it to 1, sets a value of jr to 1, and sets the similar pair set as an empty set (Step S112).

Next, the similar text extraction unit 13 instructs the LLM 15 to determine whether the relation of the it-th triplet in the template text and the relation of the jr-th triplet in the reference text are similar to each other, by using the prompt (Step S113).

The similar text extraction unit 13 determines whether the relation of the it-th triplet in the template text and the relation of the jr-th triplet in the reference text are similar to each other, from the output of the LLM 15 (Step S114). When the relation of the it-th triplet in the template text and the relation of the jr-th triplet in the reference text are not similar to each other (Step S114: No), the similar text extraction unit 13 proceeds to Step S116.

In contrast, when the relation of the it-th triplet in the template text and the relation of the jr-th triplet in the reference text are similar to each other (Step S114: yes), the similar text extraction unit 13 performs the following processing. The similar text extraction unit 13 adds a pair of the it-th triplet in the template text and the jr-th triplet in the reference text, to the similar pair set (Step S115).

Thereafter, the similar text extraction unit 13 determines whether jr has a value that is equal to or larger than the number of the triplets included in the triplet set of the reference text (Step S116). When the value of jr is smaller than the number of triplets included in the triplet set of the reference text (Step S116: No), the similar text extraction unit 13 increments the value of jr by one (Step S117). Thereafter, the similar text extraction unit 13 returns to Step S113.

In contrast, when the value of jr is equal to or larger than the number of triplets included in the triplet set of the reference text (Step S116: Yes), the similar text extraction unit 13 performs the following processing. The similar text extraction unit 13 determines whether it has a value that is equal to or larger than the number of triplets included in the triplet set of the template text (Step S118). When the value of it is smaller than the number of triplets included in the triplet set of the template text (Step S118: No), the similar text extraction unit 13 increments the value of it by one (Step S119). Thereafter, the similar text extraction unit 13 returns to Step S113.

In contrast, when the value of it is equal to or larger than the number of triplets included in the triplet set of the template text (Step S118: Yes), the similar text extraction unit 13 finishes the similar pair generation process.

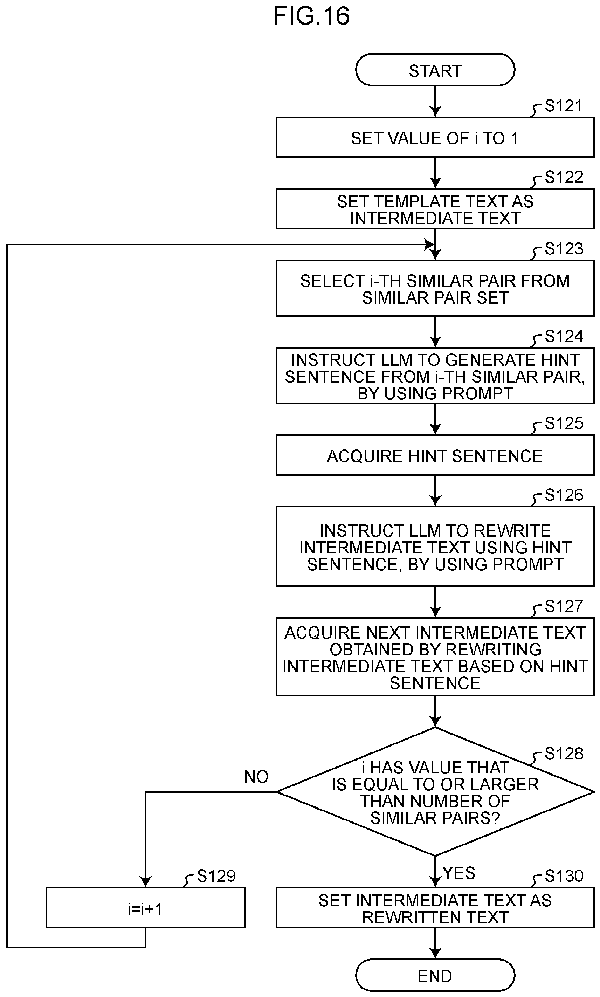

FIG. 16 is a flowchart of a process for hint sentence generation and text rewriting with use of the LLM. Next, a procedure of the process for hint sentence generation and text rewriting with use of the LLM 15 will be described with reference to FIG. 16.

The text rewriting unit 16 sets the value of i to 1 (Step S121). Here, the text rewriting unit 16 sequentially assigns numbers from 1 to the respective similar pairs included in the similar pair set.

Next, the text rewriting unit 16 sets the template text as the intermediate text (Step S122).

Next, the text rewriting unit 16 selects the i-th similar pair from the similar pair set (Step S123).

Next, the text rewriting unit 16 instructs the LLM 15 to generate the hint sentence from the selected i-th similar pair, by using the prompt (Step S124).

Then, the text rewriting unit 16 acquires the hint sentence generated from the i-th similar pair, from the LLM 15 (Step S125).

Next, the text rewriting unit 16 instructs the LLM 15 to rewrite the intermediate text using the hint sentence, by using the prompt (Step S126).

Then, the text rewriting unit 16 acquires a next intermediate text obtained by rewriting the intermediate text on the basis of the hint sentence (Step S127).

Next, the text rewriting unit 16 determines whether i has a value that is equal to or larger than the number of similar pairs (Step S128). When the value of i is smaller than the number of similar pairs (Step S128: No), the text rewriting unit 16 increments the value of i by one (Step S129). Thereafter, the text rewriting unit 16 returns to Step S123.

In contrast, when the value of i is equal to or larger than the number of similar pairs (Step S128: Yes), the text rewriting unit 16 causes the LLM 15 to output the intermediate text at that time, as the rewritten text (Step S130).

As described above, the text generation device 1 according to the present example generates the triplet that is the graph data, from each of the template text and the reference text, by using the LLM 15 having been trained. Next, the text generation device 1 uses the LLM 15 having been trained to generate the similar pair of the triplets in which the generated triplets are similar to each other. Then, the text generation device 1 causes the LLM 15 having been trained to generate the hint sentence from the similar pair, sequentially rewrites the template text by using the generated hint sentences in order, and finally completes the rewritten text.

As a result, the text generation device 1 enables generation of the rewritten text incorporating the meaning of the independent reference text while maintaining the structure of the template text. In this configuration, unlike simple matching, rewriting is performed in consideration of sentence similarity, therefore, enabling appropriate rewriting according to the contents of both texts. Furthermore, consideration of not the similarity between the entire sentences but the similarity between the triplets included in the sentences enables appropriate rewriting with a highly relevant sentences. Furthermore, not all the original texts are uniformly incorporated as in the summary, and therefore, it is possible to generate the rewritten text appropriately including meanings of both the sentences. In addition, even if the text includes a redundant text, the redundant portion is allowed to be omitted by handling the sentence as the triplet, and a natural text can be generated. Furthermore, it is possible to reduce a time for the prompt engineering and fine tuning, for efficient acquisition of the rewritten text.

### Second example

Next, a second example will be described. The text generation device 1 according to the present example is also illustrated in the block diagram of FIG. 6. The text generation device 1 according to the present example is different from the first example in that one hint sentence is generated by summarizing a plurality of triplets of reference sentences that has similar pairs in which the same triplet of the template sentence is included. Here, a hint sentence generation process will be mainly described. In the following, operations of the units similar to those of the first example may be omitted.

The training unit 14 according to the present example uses a similar pair of a triplet in the template text and a triplet in the reference text, as the explanatory variable. Furthermore, the training unit 14 sets one hint text obtained by summarizing a plurality of triplets in the reference text included in the similar pairs in the template text, as the objective variable.

Then, the training unit 14 uses, as the training data, the similar pair serving as the explanatory variable and the hint text serving as the objective variable to train the LLM 15. Therefore, upon receiving inputs of the similar pairs of the triplets in the template text and the triplets in the reference text, the LLM 15 is allowed to output the hint sentence in which the plurality of triplets of reference sentences included in the similar pairs of the same triplet of the template sentence are summarized.

The text rewriting unit 16 inputs the similar pairs of the triplets in the template text and the triplets in the reference text, to the LLM 15, thereby generating the hint sentence in which the plurality of triplets of reference sentences included in the similar pairs of the same triplet of the template sentence. In other words, the text rewriting unit 16 generates one referenced sentence on the basis of a plurality of pieces of graph data in the second text similar to the graph data of the first text.

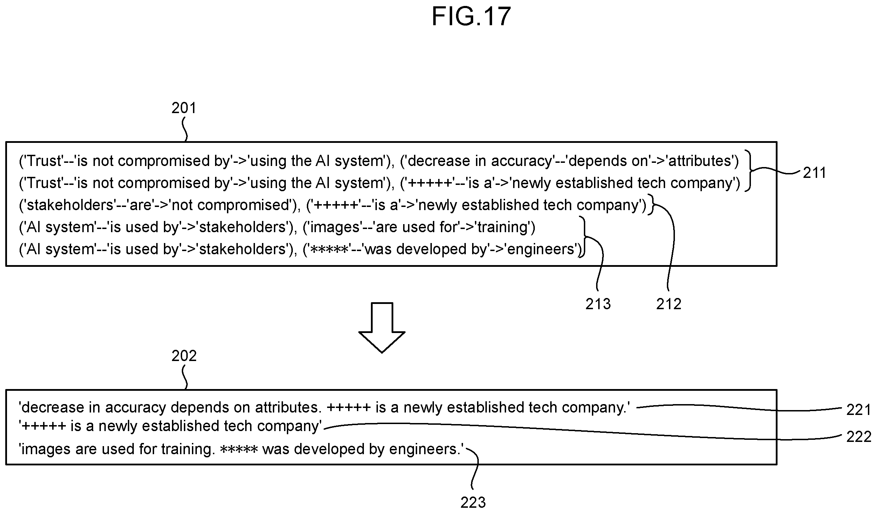

FIG. 17 is a diagram illustrating an example of the hint sentence generation process according to the second example. For example, the text rewriting unit 16 inputs a set 201 of similar pairs of the triplets in the template text and the triplets in the reference text, to the LLM 15 having been trained.

In the set 201, a similar pair group 211 includes two similar pairs each having the same triplet in the template text. Furthermore, a similar pair group 212 includes one similar pair having the same triplet in the template text. Furthermore, a similar pair group 213 includes two similar pairs each having the same triplet in the template text.

Therefore, the LLM 15 generates one hint sentence 221 from two triplets of reference sentences included in the similar pair group 211. Therefore, the LLM 15 generates one hint sentence 222 from one triplet of a reference sentence included in the similar pair group 212. Furthermore, the LLM 15 generates one hint sentence 223 from two triplets of reference sentences included in the similar pair group 213.

The text rewriting unit 16 causes the LLM 15 to rewrite the template text by using the hint sentence obtained by summarizing one or a plurality of the generated reference sentences, and acquires the rewritten text output.

As described above, the text generation device 1 according to the present example generates the one hint sentence by summarizing the plurality of triplets of reference sentences that has similar pairs in which the same triplet of the template sentence is included, and rewrites the template sentence with the hint sentence. The text generation device 1 performs rewriting processing in a loop according to the number of the hint sentences, and therefore, the summarized hint sentence enables to reduce the loops of the rewriting process. Summarizing the hint sentences in this manner makes it possible to reduce a processing time, the number of tokens processed by the LLM 15, and the like.

### Third example

Next, a third example will be described. The text generation device 1 according to the present example is also illustrated in the block diagram of FIG. 6. The text generation device 1 according to the present example is different from the first example in that when a predetermined condition is satisfied, rewriting based on the hint sentences is interrupted, and the intermediate text at that time is set as the rewritten text. Here, rewriting processing based on the hint sentence will be mainly described. In the following, operations of the units similar to those of the first example may be omitted.

The text rewriting unit 16 according to the present example inputs the similar pair set and the template text, to the LLM 15 having been trained. Then, the LLM 15 is caused to generate the hint sentence based on each of the similar pairs included in the similar pair set. Then, the text rewriting unit 16 causes the LLM 15 to rewrite the intermediate text having the template text as the original text, on the basis of the hint sentence to generate the next intermediate text.

Next, the text rewriting unit 16 gives a function that evaluates a rewriting state of the intermediate text, to the LLM 15, and causes the LLM 15 to evaluate the intermediate text generated using the function every time the intermediate text is generated. Then, when a result of the evaluation by the function satisfies predetermined conditions, the text rewriting unit 16 causes the LLM 15 to interrupt the rewriting and set the intermediate text at that time as the rewritten text.

The text rewriting unit 16 is allowed to use, for example, a function that calculates similarity between the intermediate text and the template text by using a text vector or the like. In this case, the text rewriting unit 16 uses the function to cause the LLM 15 to calculate the similarity. Next, the text rewriting unit 16 causes the LLM 15 to determine whether a first condition that the similarity is less than a predetermined threshold is satisfied. Furthermore, when the first condition is satisfied, the text rewriting unit 16 causes the LLM 15 to determine whether a second condition that the current similarity is lower than an average of the similarities calculated twice in the past is satisfied. Then, the text rewriting unit 16 causes the LLM 15 to interrupt the rewriting when the intermediate text satisfies both of the first condition and the second condition. Then, the text rewriting unit 16 causes the LLM 15 to output the intermediate text at that time as the rewritten text.

As described above, in the processing of generating the third text, when the rewritten intermediate text satisfies the predetermined conditions, the text rewriting unit 16 stops the rewriting and sets the intermediate text satisfying the predetermined conditions as the third text.

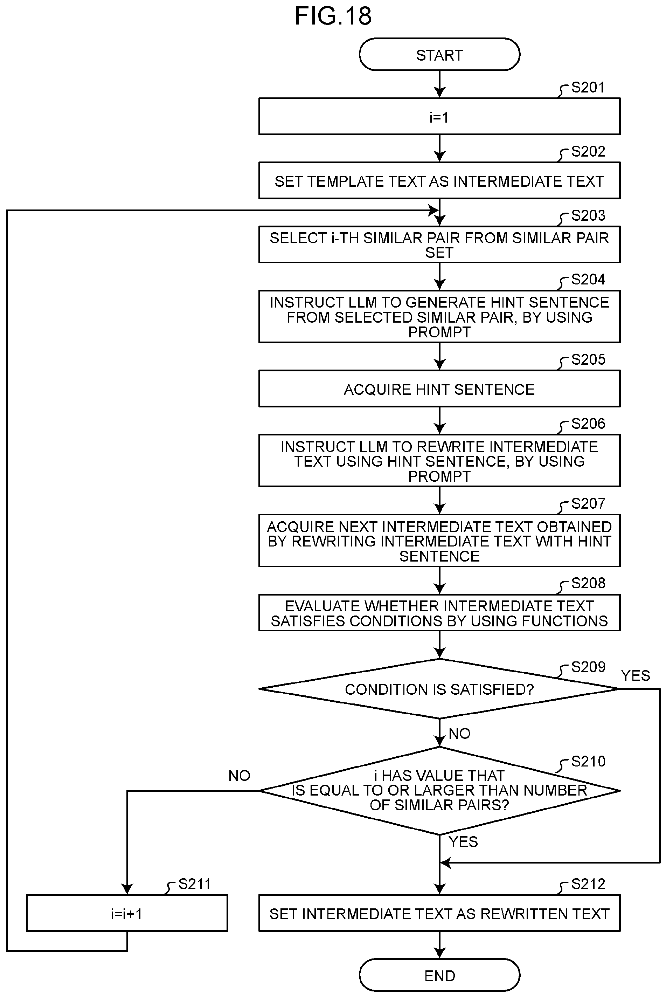

FIG. 18 is a flowchart of a process for hint sentence generation and text rewriting according to the third example. Next, a procedure of the process for hint sentence generation and text rewriting according to the third example will be described with reference to FIG. 18.

The text rewriting unit 16 sets the value of i to 1 (Step S201). Here, the text rewriting unit 16 sequentially assigns numbers from 1 to the respective similar pairs included in the similar pair set.

Next, the text rewriting unit 16 sets the template text as the intermediate text (Step S202).

Next, the text rewriting unit 16 selects the i-th similar pair from the similar pair set (Step S203).

Next, the text rewriting unit 16 instructs the LLM 15 to generate the hint sentence from the selected i-th similar pair, by using the prompt (Step S204).

Then, the text rewriting unit 16 acquires the hint sentence generated from the i-th similar pair, from the LLM 15 (Step S205).

Next, the text rewriting unit 16 instructs the LLM 15 to rewrite the intermediate text using the hint sentence, by using the prompt (Step S206).

Then, the text rewriting unit 16 acquires the next intermediate text obtained by rewriting the intermediate text on the basis of the hint sentence (Step S207).

Next, the text rewriting unit 16 causes the LLM 15 to determine whether the intermediate text satisfies the conditions by using the functions (Step S208).

The text rewriting unit 16 determines whether the intermediate text satisfies the condition by using the output from the LLM 15 (Step S209). When the intermediate text satisfies the conditions (Step S209: Yes), the text rewriting unit 16 causes the LLM 15 to interrupt the rewriting of the text. Then, the text rewriting unit 16 causes the LLM 15 to output the intermediate text at that time, as the rewritten text (step 212).

In contrast, when the intermediate text does not satisfy the conditions (Step S209: No), the text rewriting unit 16 determines whether the value of i is equal to or larger than the number of similar pairs (Step S210). When the value of i is smaller than the number of similar pairs (Step S210: No), the text rewriting unit 16 increments the value of i by one (Step S211). Thereafter, the text rewriting unit 16 returns to Step S203.

In contrast, when the value of i is equal to or larger than the number of similar pairs (Step S210: Yes), the text rewriting unit 16 causes the LLM 15 to output the intermediate text at that time, as the rewritten text (Step S212).

As described above, when the rewritten intermediate text satisfies the predetermined conditions, the text generation device 1 according to the present example interrupts the rewriting of the text and sets the intermediate text at that time as the rewritten text. When there are a large number of hint sentences or the like, the frequency of rewriting increases, and repeated writing may have a possibility that the meaning of the template text or the reference text or the meanings of both texts are separated from each other. In contrast, the text generation device 1 according to the present example sets in advance the conditions each of which enables determination of separation in meaning to interrupt the rewriting when the condition is satisfied. This configuration makes it possible to reduce a negative influence such as separation in meaning of the rewritten text from the meanings of either or both of the template text and the reference text.

### Fourth example

Next, a fourth example will be described. The text generation device 1 according to the present example is also illustrated in the block diagram of FIG. 6. The text generation device 1 according to the present example is different from the first example in that the triplet generation process and the similar pair generation process are performed without using the LLM 15. Here, the triplet generation process and the similar pair generation process will be mainly described. Furthermore, in the following, operations of the units similar to those of the first example may be omitted.

The data conversion unit 12 according to the present example divides the template text and the reference text into sentences. Next, the data conversion unit 12 selects one sentence from the sentences of the template text. Next, the data conversion unit 12 performs morphological analysis of the selected sentence. Next, the data conversion unit 12 extracts a triplet from a result of the performance of the morphological analysis. Then, the data conversion unit 12 adds the extracted triplet to a triplet set. The data conversion unit 12 extracts the triplet from each sentence for all the sentences generated from the template text to generate the triplet set of the template text.

In addition, the data conversion unit 12 selects one sentence from the sentences of the reference text and extracts a triplet from each sentence as in the template text. The data conversion unit 12 extracts the triplet from each sentence for all the sentences generated from the reference text to generate the triplet set of the reference text.

The similar text extraction unit 13 uses a comparison function to calculate the similarity between the relation of the triplet in the template text and the relation of the triplet in the reference text. When the calculated similarity is equal to or larger than a predetermined similarity threshold, a pair of the triplet in the template text and the triplet in the reference text is added to a similar pair set. The similar text extraction unit 13 extracts similar pairs of the triplets for each triplet of the reference text, as described above, for all the triplets of the template text to generate the similar pair set.

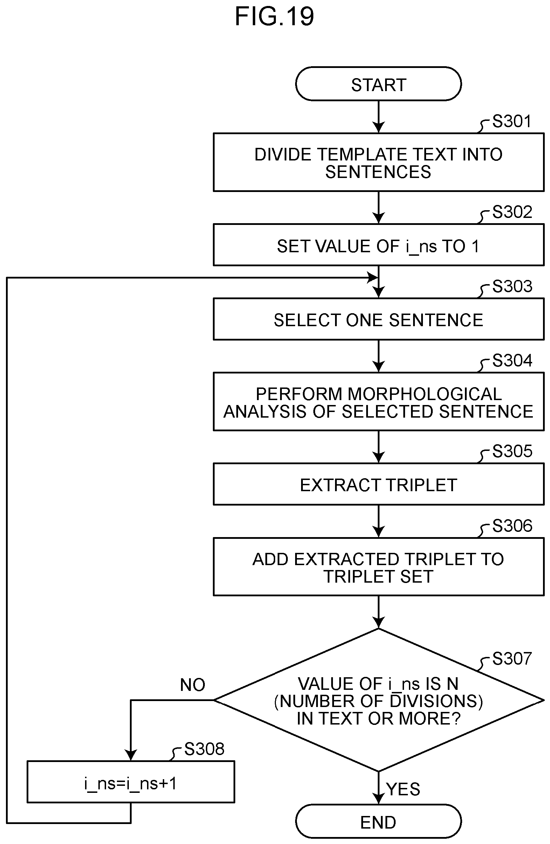

FIG. 19 is a flowchart of the triplet extraction process using the morphological analysis according to the fourth example. Next, a procedure of the triplet extraction process using the morphological analysis will be described with reference to FIG. 19. Here, an example of triplet extraction from the template text will be described, but the same applies to the reference text.

The data conversion unit 12 divides the template text into sentences (Step S301). Here, the template text divided into N sentences will be described.

Next, the data conversion unit 12 sets the value of i_ns to 1 (Step S302).

Next, the data conversion unit 12 selects one sentence (Step S303).

Next, the data conversion unit 12 performs the morphological analysis of the selected sentence (Step S304).

Next, the data conversion unit 12 extracts a triplet from a result of the performance of the morphological analysis (Step S305).

Next, the data conversion unit 12 adds the extracted triplet to the triplet set (Step S306).

Next, the data conversion unit 12 determines whether the value of i_ns is N or more (Step S307). When the value of i_ns is smaller than N (Step S307: No), the data conversion unit 12 increments the value of i_ns by one (Step S308). Thereafter, the data conversion unit 12 returns to Step S303.

In contrast, when the value of i_ns is N or more (Step S307: Yes), the data conversion unit 12 finishes the triplet extraction process.

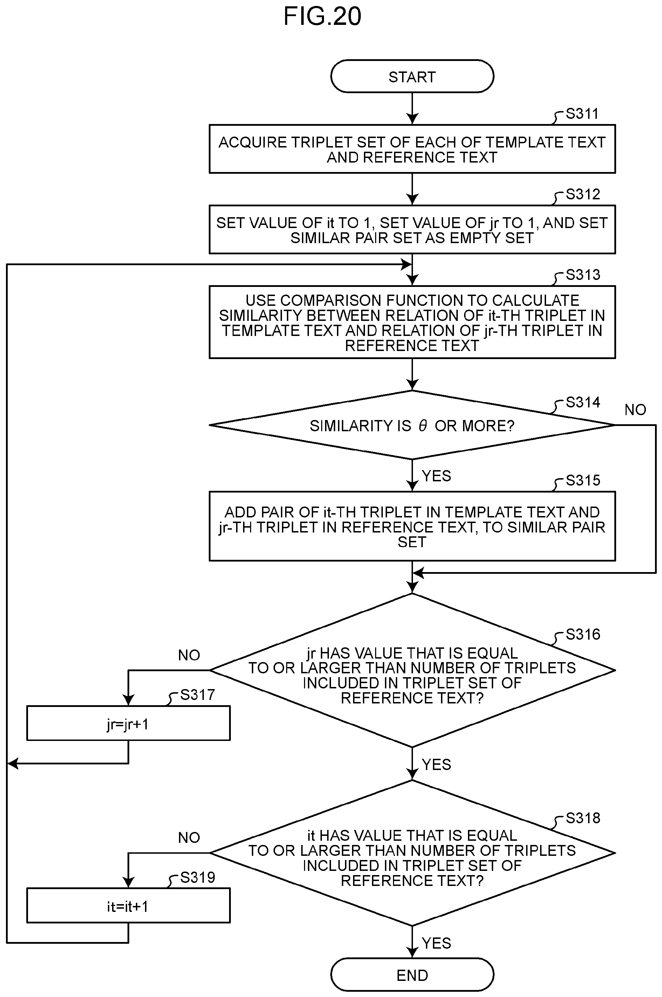

FIG. 20 is a flowchart of a similar pair generation process using the comparison function for a character string according to the fourth example. Next, a procedure of the similar pair generation process using the comparison function for a character string will be described with reference to FIG. 20.

The similar text extraction unit 13 acquires a triplet set of each of the template text and the reference text (Step S311). Here, the similar text extraction unit 13 sequentially assigns numbers from 1 to the respective triplets included in the triplet set of the template text. Similarly, the similar text extraction unit 13 sequentially assigns numbers from 1 to the respective triplets included in the triplet set of the reference text.

Next, the similar text extraction unit 13 sets the value of it to 1, sets the value of jr to 1, and sets the similar pair set as the empty set (Step S312).

Next, the similar text extraction unit 13 uses the comparison function to calculate the similarity between the relation of the it-th triplet in the template text and the relation of the jr-th triplet in the reference text (Step S313).

Next, the similar text extraction unit 13 determines whether the similarity between the relation of the it-th triplet in the template text and the relation of the jr-th triplet in the reference text is equal to or larger than a predetermined similarity threshold θ (Step S314). When the similarity between the relation of the it-th triplet in the template text and the relation of the jr-th triplet in the reference text is less than θ (Step S314: No), the similar text extraction unit 13 proceeds to Step S316.

In contrast, when the similarity between the relation of the it-th triplet in the template text and the relation of the jr-th triplet in the reference text is θ or more (Step S314: yes), the similar text extraction unit 13 performs the following processing. The similar text extraction unit 13 adds a pair of the it-th triplet in the template text and the jr-th triplet in the reference text, to the similar pair set (Step S315).

Thereafter, the similar text extraction unit 13 determines whether jr has a value that is equal to or larger than the number of triplets included in the triplet set of the reference text (Step S316). When the value of jr is smaller than the number of triplets included in the triplet set of the reference text (Step S316: No), the similar text extraction unit 13 increments the value of jr by one (Step S317). Thereafter, the similar text extraction unit 13 returns to Step S313.

In contrast, when the value of jr is equal to or larger than the number of triplets included in the triplet set of the reference text (Step S316: Yes), the similar text extraction unit 13 performs the following processing. The similar text extraction unit 13 determines whether it has a value that is equal to or larger than the number of triplets included in the triplet set of the template text (Step S318). When the value of it is smaller than the number of triplets included in the triplet set of the template text (Step S318: No), the similar text extraction unit 13 increments the value of it by one (Step S319). Thereafter, the similar text extraction unit 13 returns to Step S313.

In contrast, when the value of it is equal to or larger than the number of triplets included in the triplet set of the template text (Step S318: Yes), the similar text extraction unit 13 finishes the similar pair generation process.

Here, in the present example, both the triplet generation process and the similar pair generation process are performed without using the LLM 15, but either one thereof may be performed in the LLM 15 as in the first example.

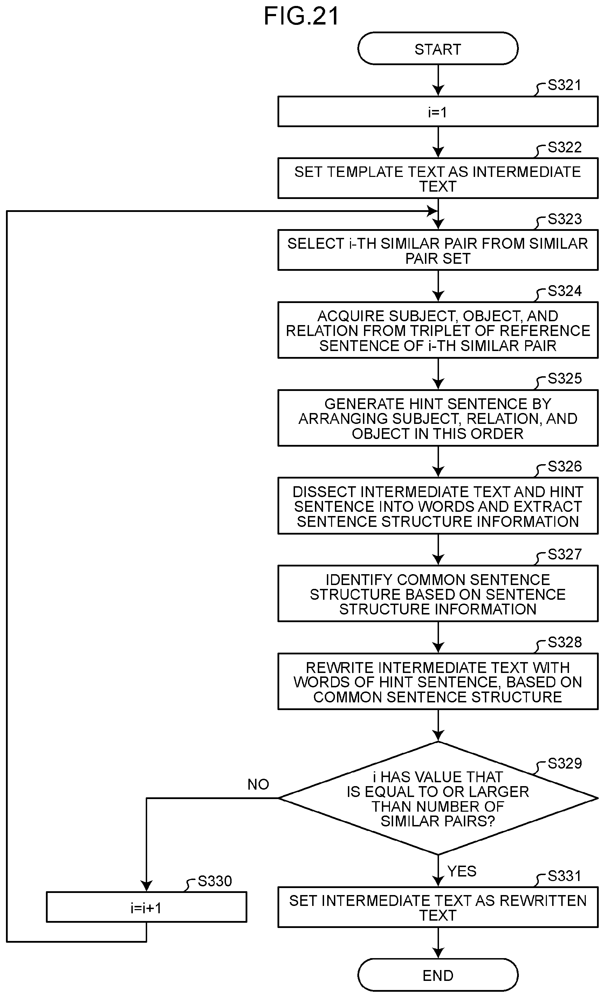

Furthermore, in the present example, the rewriting of the text is performed using the LLM 15, but it is also possible to perform the processing of generating the hint sentence and rewriting the template text based on the hint sentence, without using the LLM 15. FIG. 21 is a flowchart of a process for hint sentence generation and text rewriting without use of the LLM. Next, a procedure of the process for hint sentence generation and text rewriting without use of the LLM 15 will be described with reference to FIG. 21.

The text rewriting unit 16 sets the value of i to 1 (Step S321). Here, the text rewriting unit 16 sequentially assigns numbers from 1 to the respective similar pairs included in the similar pair set.

Next, the text rewriting unit 16 sets the template text as the intermediate text (Step S322).

Next, the text rewriting unit 16 selects the i-th similar pair from the similar pair set (Step S323).

Next, the text rewriting unit 16 acquires the subject, the object, and the relation from a triplet of the reference sentence of the selected i-th similar pair (Step S324).

Next, the text rewriting unit 16 generates the hint sentence by arranging the subject, the relation, and the object in this order (Step S325).

Next, the text rewriting unit 16 dissects the intermediate text and the hint sentence into words and extracts sentence structure information about the respective words (Step S326).

Next, the text rewriting unit 16 identifies a common sentence structure of the intermediate text and the hint sentence, on the basis of the extracted sentence structure information (Step S327).

Then, the text rewriting unit 16 rewrites the intermediate text with the words of the hint sentence, on the basis of the identified common sentence structure, and acquires the next intermediate text (Step S328).

Next, the text rewriting unit 16 determines whether i has a value that is equal to or larger than the number of similar pairs (Step S329). When the value of i is smaller than the number of similar pairs (Step S329: No), the text rewriting unit 16 increments the value of i by one (Step S330). Thereafter, the text rewriting unit 16 returns to Step S323.

In contrast, when the value of i is equal to or larger than the number of similar pairs (Step S329: Yes), the text rewriting unit 16 sets the intermediate text at that time as the rewritten text (Step S331).

As described above, the text generation device 1 according to the present example performs the triplet generation process and the similar pair generation process without using the LLM 15. As described above, even when the triplet generation process and the similar pair generation process are performed without using the LLM 15, the text generation device 1 enables generation of the rewritten text incorporating the meaning of the independent reference text while maintaining the structure of the template text.

### Fifth example

Next, a fifth example will be described. The text generation device 1 according to the present example inputs a prompt that instructs rewriting of the second text to the large-scale language model, instead of the prompt that instructs rewriting of the first text. For example, the text generation device 1 acquires the first text serving as the norm and the second text related to the case example. Next, for example, the text generation device 1 generates the graph data of the second text including the noun phrases included in the second text and the information about the relation between the noun phrases in the second text, on the basis of the second text. Then, for example, the text generation device 1 inputs the first text and the generated the graph data of the second text, and the prompt that instructs rewriting of the second text, to the large-scale language model, thereby generating the third text satisfying the requirements defined in the first text.

Specifically, the text generation device 1 according to the present example is also illustrated in the block diagram of FIG. 6. In the following, operations of the units similar to those of the first example may be omitted.

The data conversion unit 12 converts the template text into the triplet set. Furthermore, the data conversion unit 12 converts the reference text into the triplet set.

The similar text extraction unit 13 extracts a triplet in the reference text similar to each of the triplets included in the triplet set of the template text. The similar text extraction unit 13 sets the triplet in the template text and the triplet in the reference text that are similar to each other, as the similar pair, and acquires a similar pair set including a plurality of the similar pairs.

The text rewriting unit 16 acquires the triplets in the reference text included in the similar pair set. Next, the text rewriting unit 16 generates the hint text serving as a hint for rewriting of the reference text, from the acquired triplets in the reference text. Next, the text rewriting unit 16 inputs the generated hint sentence group and the template text, and the prompt that instructs rewriting of the reference text, to the LLM 15 having been trained. Here, the LLM 15 according to the present example has been trained using the training data including the template text and the triplets in the reference text, and the rewritten text obtained by rewriting the reference text.

The text rewriting unit 16 acquires the rewritten text in which the reference text output from the LLM 15 is rewritten, as the response to the input. This rewritten text satisfies the requirements defined in the template text while including the content of the reference text.

As described above, the text generation device 1 according to the present example inputs triplets, from among the triplets in the reference text, similar to those of the template text and the template text, to the LLM 15, and acquires the rewritten text in which the reference text is rewritten, as the output in response to the input. In this way, the text generation device 1 enables generation of the rewritten text incorporating the meaning of the independent reference text while maintaining the structure of the template text, even by rewriting of the reference text.

### Hardware configuration

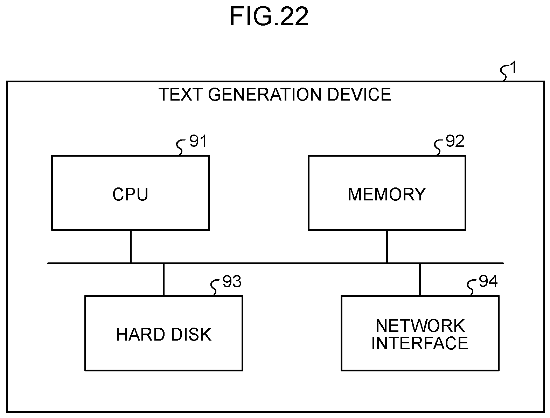

FIG. 22 is a hardware configuration diagram of the text generation device. Next, an exemplary hardware configuration for implementing functions of the text generation device 1 will be described with reference to FIG. 22.

As illustrated in FIG. 22, the text generation device 1 includes, for example, a central processing unit (CPU) 91, a memory 92, a hard disk 93, and a network interface 94. The CPU 91 is connected to the memory 92, the hard disk 93, and the network interface 94 via a bus.

The network interface 94 is an interface for communication between the text generation device 1 and an external device. The network interface 94 relays communication between the user terminal device 2 and the CPU 91, for example. In other words, the network interface 94 implements communication with the user terminal device 2 in the text receiving unit 11 and the output unit 17.

The hard disk 93 is an auxiliary storage device. The hard disk 93 may store the LLM 15 illustrated in FIG. 6. In addition, the hard disk 93 stores various programs including programs to implement the functions of the text receiving unit 11, the data conversion unit 12, the similar text extraction unit 13, the training unit 14, the text rewriting unit 16, and the output unit 17, which are illustrated in FIG. 6.

The memory 92 is a main storage device. For example, the memory 92 is allowed to use a dynamic random access memory (DRAM).

The CPU 91 reads various programs from the hard disk 93, loads the programs into the memory 92, and executes the programs. As a result, the CPU 91 implements the functions of the text receiving unit 11, the data conversion unit 12, the similar text extraction unit 13, the training unit 14, the text rewriting unit 16, and the output unit 17, which are illustrated in FIG. 6.

In one aspect, according to the present invention, it is possible to readily generate a text appropriately incorporating the meanings of a plurality of texts.

## Claims

1. A text generation program that causes a computer (1) to execute a process comprising:
acquiring (S111) a first text serving as a norm and a second text related to a case example;
first generating (S112) graph data of the second text including noun phrases included in the second text and information about a relation between the noun phrases in the second text, based on the second text; and
first inputting (S113-S118) a prompt including the graph data of the second text generated, and the first text, to a large-scale language model to generate a third text satisfying a requirement defined in the first text.

2. The text generation program according to claim 1, wherein the first inputting (S113-S118) includes second inputting the first text and the graph data of the second text, and a prompt that instructs rewriting of the first text or the second text, to the large-scale language model to generate the third text satisfying the requirement defined in the first text.

3. The text generation program according to claim 2, wherein the process further includes:
second generating (S113-S118) graph data of the first text including noun phrases included in the first text and information about a relation between the noun phrases in the first text, based on the first text; and
identifying (S113-S118) the graph data of the second text similar to the graph data of the first text, wherein
the first inputting (S113-S118) includes:
third generating a referenced sentence corresponding to each piece of the graph data of the first text based on the graph data of the second text identified; and
third inputting the referenced sentence generated and the first text, and the prompt that instructs rewriting of the first text based on the referenced sentence, to the large-scale language model to generate a third text in which the first text is rewritten based on the second text and the requirement defined in the first text is reflected.

4. The text generation program according to claim 3, wherein the first inputting (S113-S118) includes repeatedly generating an intermediate text based on the referenced sentence, the first text, and the prompt, for each of the referenced sentences generated, for rewriting of the intermediate text.

5. The text generation program according to claim 4, wherein the first inputting (S113-S118) includes, when the intermediate text rewritten satisfies a predetermined condition, rewriting is stopped, and the intermediate text satisfying the predetermined condition is set as the third text.

6. The text generation program according to claim 3, wherein the second generating (S113-S118) includes generating one referenced sentence based on a plurality of pieces of the graph data in the second text similar to the graph data of the first text.

7. The text generation program according to claim 1, wherein the first generating (S112) includes generating, as the graph data of the second text, a triplet including a subject and an object that are noun phrases and a relation indicating association between the subject and the object.

8. The text generation program according to claim 1, wherein
the acquiring (S111) includes:
acquiring a text related to assessment that satisfies requirements to be satisfied, as the first text; and
acquiring a text in which an outline related to a main subject is described, as the second text.

9. A text generation method carried out by a computer (1), comprising:
acquiring a first text serving as a norm and a second text related to a case example;
generating graph data including noun phrases included in the second text and information about a relation between the noun phrases in the second text, based on the second text; and
inputting a prompt including the graph data generated, and the first text, to a large-scale language model to generate a third text satisfying a requirement defined in the first text.

10. A text generation device (1) comprising:
a text receiving unit (11) that acquires a first text serving as a norm and a second text related to a case example;
a data conversion unit (12, 13) that generates graph data including noun phrases included in the second text and information about a relation between the noun phrases in the second text, based on the second text; and
a text rewriting unit (15, 16) that inputs a prompt including the graph data generated, and the first text, to a large-scale language model to generate a third text satisfying a requirement defined in the first text.
